# DEMANDE DE BREVET EUROPEEN

(11) **EP 4 738 787 A1**
(43) Date de publication de la demande: **06.05.2026**
(21) Numéro de dépôt: 25212283.3
(22) Date de dépôt: 30.10.2025
(51) Int. Cl.: H04L 47/28, H04L 12/43, H04L 12/437, H04L 12/46, H04L 67/12, H04L 12/42

(54) **RÉSEAU AVIONIQUE DE COMMUNICATION EN ANNEAU, ET AÉRONEF CIVIL ASSOCIÉ**

(30) Priorité: 31.10.2024 FR 2411939
(71) Demandeur: THALES, 92190 Meudon (FR)
(72) Inventeur: JOUANNA, Pierre, 31037 TOULOUSE (FR)
(74) Mandataire: Lavoix

(57) **Abrégé**

L'invention concerne un réseau avionique de communication en anneau (15), comprenant au moins trois nœuds de communication (20) reliés entre eux,
chaque nœud comportant une paire de ports de communication (Rx1, Tx1 ; Rx2, Tx2) et étant connecté entre des nœuds précédent et suivant respectifs,
au moins un nœud (20MA) comportant un module de séquencement (25) configuré pour générer des trames de transport de données,
chaque nœud étant destiné à être relié à un équipement avionique (18) respectif et comportant un module de traitement (28) pour, via lesdites trames, recevoir des données à destination dudit équipement et/ou pour envoyer des données depuis ledit équipement,
à un instant temporel donné, un seul des nœuds (20) étant configuré pour générer les trames de transport, le module de séquencement (25) étant activé pour un seul des nœuds à la fois.

## Description

La présente invention concerne un réseau avionique de communication, destiné à être embarqué à bord d'un aéronef.

L'invention concerne également un aéronef civil comprenant un tel réseau avionique de communication et des équipements avioniques interconnectés via ledit réseau.

L'invention se situe dans le domaine des réseaux de communications internes à l'avionique, ou plus généralement à des réseaux embarqués fortement contraints en termes de disponibilité (redondance) et d'intégrité (vérification du contenu avec des échanges déterministes temporellement).

La norme ARINC 664 Partie 7, également notée A664 p7, s'est imposée sur les récents programmes avions majeurs comme réseau de communication interne à l'avionique embarquée. C'est un réseau en étoile organisé autour de plusieurs commutateurs permettant de relier entre eux un nombre important d'équipements embarqués. Cette norme apporte un haut niveau d'intégrité de transport des données et permet également un haut niveau de disponibilité du réseau en dupliquant les routeurs de communication afin d'être tolérant aux pannes des routeurs.

Cependant, un réseau conforme à cette norme présente notamment les défauts suivants.

Les taille, masse et consommation, ou SWaP (de l'anglais *Size, Weight and Power*), d'un tel réseau ne sont pas optimaux. En effet, un tel réseau impose *a minima* deux commutateurs pour assurer l'intégrité du réseau, et souvent un nombre plus important de ces commutateurs pour assurer la disponibilité du réseau, ce qui dégrade la taille, le poids ainsi que la consommation de la solution. Il est à noter que ce type de réseau présente un talon SWaP important pénalisant les petits réseaux : dès que l'on veut connecter trois équipements, il faut deux commutateurs pour assurer intégrité et disponibilité de ce mini-réseau.

Le coût des commutateurs dégrade le coût global d'un tel réseau et la fiabilité du commutateur est prise en compte par la redondance des liens de communication donc des commutateurs.

Les commutateurs génèrent un délai de commutation entrainant une latence dans la transmission de données. Cette latence dépend de la topologie des commutateurs, mais aussi du volume de données commuté. Un pire cas de latence peut être calculé une fois l'ensemble des flux de données connus via une analyse statistique outillée. La variation de latence ou jigue (de l'anglais *jitter*) affectant chaque donnée est aussi calculée et doit être maîtrisée et contenue, ce qui impose un faible taux d'utilisation de la bande passante théorique, en deçà de 50%.

Un tel réseau manque également de déterminisme, et les concepteurs d'architectures basées sur un tel réseau composent avec un pire cas de latence et de jigue, ce qui restreint le domaine d'emploi aux architectures temps réel « mou ». Par exemple, le transport de voix sur le réseau, qui est très sensible au jigue peut difficilement être envisagé sur un tel réseau, pas plus que des systèmes ayant des besoins en calcul de données à la milliseconde. De plus, si un nouvel équipement est ajouté à un tel réseau, avec de nouveaux flux de données, la qualification du réseau en termes de latence et de jigue est à refaire complètement.

Le but de l'invention est alors de proposer un réseau avionique de communication amélioré.

A cet effet, l'invention a pour objet un réseau avionique de communication en anneau, destiné à être embarqué à bord d'un aéronef et comprenant au moins trois nœuds de communication reliés entre eux en forme d'un anneau,
chaque nœud de communication comportant au moins une paire de ports de communication et étant connecté directement entre un nœud précédent et un nœud suivant respectifs via deux ports distincts respectifs, les ports de communication de deux nœuds successifs de l'anneau étant connectés entre eux via une liaison filaire de données,
au moins un nœud de communication comportant un module de séquencement configuré pour générer des trames de transport de données, chaque trame circulant en boucle successivement de nœud en nœud,
chaque nœud de communication étant destiné à être relié à un équipement avionique respectif et comportant un module de traitement configuré pour, via les trames générées, recevoir des données à destination dudit équipement avionique de la part d'un autre équipement avionique et/ou pour envoyer des données depuis ledit équipement avionique à destination d'au moins un autre équipement avionique,
à un instant temporel donné, un seul des nœuds de communication étant configuré pour générer les trames de transport de données, le module de séquencement étant activé pour un seul des nœuds de communication à la fois.

Suivant d'autres aspects avantageux de l'invention, le réseau comprend une ou plusieurs des caractéristiques suivantes, prises isolément ou suivant toutes les combinaisons techniquement possibles :
- chaque nœud de communication comporte le module de séquencement et le module de traitement ;
- au moins un nœud de communication comporte un module de surveillance configuré pour comparer une période inter-trame à une plage prédéfinie de valeurs, une anomalie de trame étant détectée si la période inter-trame n'appartient pas à ladite plage, la période inter-trame étant la différence entre deux instants temporels de réception de trames successives par le nœud comportant le module de surveillance ;
   chaque nœud de communication comportant de préférence le module de surveillance et le module de traitement ;
   le module de surveillance étant de préférence encore activé pour tous les nœuds de communication ;
- chaque nœud de communication comporte le module de séquencement, le module de surveillance et le module de traitement ;
   le module de surveillance étant de préférence activé pour tous les nœuds de communication ;
- parmi les nœuds de communication, deux nœuds de communication, dits nœuds maitre, comportent chacun le module de séquencement et le module de surveillance, le module de séquencement étant alors activé pour un nœud maitre, dit nœud maitre actif, et le module de surveillance étant activé pour l'autre nœud maitre, dit nœud maitre passif ;
   les nœuds de communication, dits nœuds esclave, autres que les nœuds maitre comportant de préférence seulement le module de traitement parmi les modules de séquencement, de surveillance et de traitement ;
- chaque nœud de communication comporte une première paire de ports de communication et une deuxième paire de ports de communication, redondante de la première paire ; les ports de communication des premières paires étant successivement connectés entre eux via des premières liaisons filaires de données, et les ports de communication des deuxièmes paires étant successivement connectés entre eux via des deuxièmes liaisons filaires de données, redondantes des premières liaisons ;
- entre deux nœuds successifs de l'anneau, les première et deuxième liaisons filaires sont agencées en parallèle l'une de l'autre ; et les modules de traitement desdits nœuds sont configurés pour faire circuler les données suivant un premier sens sur la première liaison, et respectivement suivant un deuxième sens, opposé au premier sens, sur la deuxième liaison ;
- chaque paire de ports comporte un port récepteur et un port émetteur ; et
   + si les deux ports de la première paire sont fonctionnels, le module de traitement est configuré pour acquérir une trame reçue sur le port récepteur de la première paire, pour traiter ladite trame, puis pour envoyer la trame traitée via le port émetteur de la première paire ; et le module de traitement est configuré pour transférer sans traitement, au port émetteur de la deuxième paire, chaque trame reçue sur le port récepteur de la deuxième paire ;
   + si le port récepteur de la première paire est dysfonctionnel, le module de traitement est configuré pour acquérir une trame reçue sur le port récepteur de la deuxième paire, pour traiter ladite trame, puis pour envoyer la trame traitée via le port émetteur de la première paire ; et
   + si le port émetteur de la première paire est dysfonctionnel, le module de traitement est configuré pour acquérir une trame reçue sur le port récepteur de la première paire, pour traiter ladite trame, puis pour envoyer la trame traitée via le port émetteur de la deuxième paire ;
- au moins un nœud de communication comporte une paire additionnelle de ports de communication configurée pour être connectée à un autre réseau de communication ;
- le module de séquencement est configuré pour générer les trames de transport de données en forme de liens virtuels selon la norme ARINC 664 Partie 7, et pour associer un espace inter-trame respectif à chaque lien virtuel, l'espace inter-trame étant une durée minimale entre des instants temporels de début de deux trames successives du lien virtuel correspondant ; et
- pour chaque trame de transport de données, le module de traitement d'un seul nœud respectif est autorisé à écrire des données dans ladite trame pour envoi de données à un ou plusieurs des autres équipements, et les modules de traitement de tous les autres nœuds sont autorisés seulement à lire des données de ladite trame.

L'invention concerne également un aéronef comprenant un réseau avionique de communication en anneau, tel que défini ci-dessus, et des équipements avioniques interconnectés via ledit réseau.

L'invention apparaîtra plus clairement à la lecture de la description qui va suivre, donnée uniquement à titre d'exemple non limitatif, et faite en référence aux dessins dans lesquels :
- la figure 1 est une représentation schématique d'un aéronef selon l'invention, comprenant une installation avionique comportant un réseau avionique de communication et des équipements avioniques interconnectés via ledit réseau, le réseau comportant une pluralité de nœuds de communication reliés entre eux en forme d'un anneau ;
- la figure 2 est une représentation schématique plus détaillée d'un nœud maître de communication, et respectivement d'un nœud esclave de communication ; ainsi que de la génération ; par le nœud maître ; de trames de transport de données sous forme de liens virtuels ;

- la figure 3 est une vue représentative de l'espacement temporel entre trames de transport de données ; ainsi que de la structure d'une trame respective ;
- la figure 4 est une vue illustrant la reconfiguration du réseau avionique de communication en anneau de la figure 1 en cas de dysfonctionnement d'un nœud de communication respectif ;
- la figure 5 est une représentation schématique de deux réseaux avioniques de communication en anneau, connectés entre eux ; et
- la figure 6 est une représentation schématique d'une première installation avionique avec deux réseaux avioniques de communication en anneau connectés entre eux et interconnectant des équipements avioniques tels que des écrans d'affichage, des cartes électroniques de calcul et des cartes électroniques d'entrées-sorties ; et respectivement d'une deuxième installation avionique analogue à la première installation et où les équipements avioniques sont en outre interconnectés via un troisième réseau de communication en étoile.

Dans la suite de la description, l'expression « sensiblement égale à » définit une relation d'égalité à plus ou moins 20%, de préférence à plus ou moins 10%, de préférence encore à plus ou moins 5%.

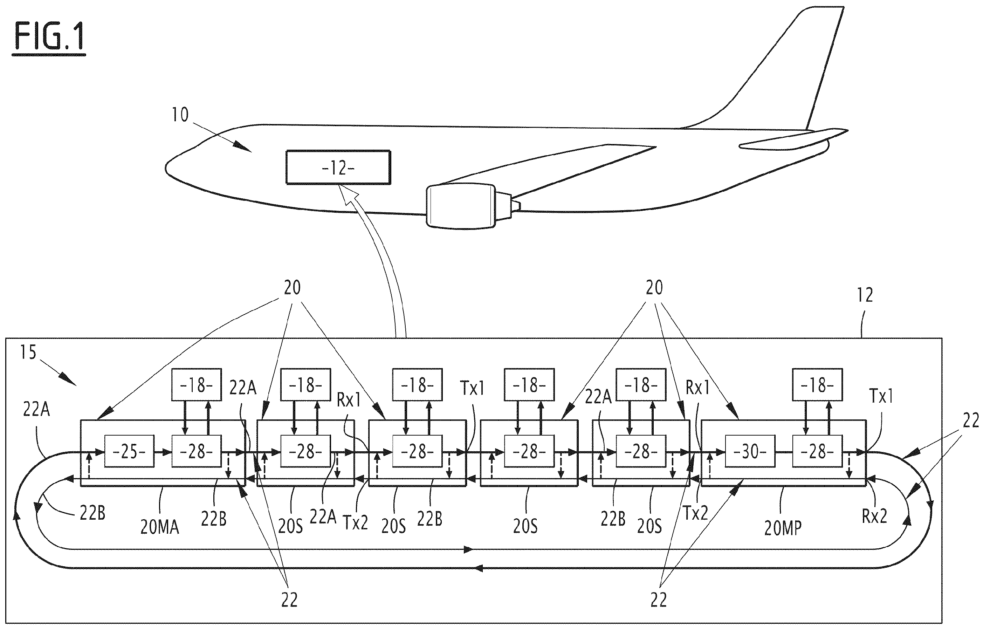

Sur la figure 1, un aéronef civil 10 comprend une installation avionique 12 comportant un réseau avionique de communication en anneau 15 et des équipements avioniques 18 interconnectés via ledit réseau 15.

L'aéronef civil 10 est notamment un avion de ligne, comme représenté sur la figure 1. En variante, l'aéronef civil 10 est un aéronef à voilure tournante, tel qu'un hélicoptère civil, ou encore un drone civil piloté à distance par un téléopérateur.

Le réseau avionique de communication 15 est destiné à être embarqué à bord de l'aéronef 10, et comprend au moins trois nœuds de communication 20 reliés entre eux en forme d'un anneau, via des liaisons filaires 22 respectives de données.

Le réseau avionique de communication 15 est avantageusement constitué desdits nœuds de communication 20 et des liaisons filaires 22 interconnectant lesdits nœuds 20.

Parmi les nœuds 20 du réseau de communication 15, certains nœuds 20 sont dits nœuds maîtres et alors notés 20M, et plus précisément 20MA pour un nœud maître actif, 20MP pour un nœud maître passif ; et d'autres nœuds 20 sont dits nœuds passifs et alors notés 20S, comme cela sera décrit plus en détail par la suite. La référence 20 utilisée pour les nœuds de communication désignera alors de manière générale aussi bien les nœuds maitres 20MA, 20MP que les nœuds esclaves 20S.

Le réseau avionique de communication 15 comporte au moins un nœud maître actif 20MA et au moins deux autres nœuds 20S, 20MP.

Chaque nœud de communication 20 est réalisé sous forme d'un dispositif électronique, et est destiné à être relié à un équipement avionique 18 respectif.

Chaque nœud de communication 20 comporte au moins une paire de ports de communication Rx1, Tx1, Rx2, Tx2, et est connecté directement entre un nœud 20 précédent et un nœud 20 suivant respectifs via deux ports distincts, notés Rx1, Tx1, ou Rx2, Tx2 respectifs, les ports de communication Rx1, Tx1, Rx2, Tx2 de deux nœuds 20 successifs de l'anneau étant connectés entre eux via une liaison filaire de données 22. Chaque paire de ports de communication Rx1, Tx1, Rx2, Tx2 comporte un port récepteur Rx1, Rx2 configuré pour recevoir des données depuis le port émetteur Tx1, Tx2 d'un nœud 20 précédent, et un port émetteur Tx1, Tx2 configuré pour émettre des données à destination du port récepteur Rx1, Rx2 d'un nœud 20 suivant.

En complément facultatif, chaque nœud de communication 20 comporte une première paire de ports de communication Rx1, Tx1 et une deuxième paire de ports de communication Rx2, Tx2, redondante de la première paire Rx1, Tx1. Les ports de communication Rx1, Tx1 des premières paires sont successivement connectés entre eux via des premières liaisons filaires de données 22A. Les ports de communication des deuxièmes paires Rx2, Tx2 sont successivement connectés entre eux via des deuxièmes liaisons filaires de données 22B, redondantes des premières liaisons 22A. La première paire de ports de communication Rx1, Tx1 est également appelée paire primaire, et de manière analogue chaque première liaison filaire 22A est également appelée liaison filaire primaire. La deuxième paire de ports de communication Rx2, Tx2 est également appelée paire secondaire, et de manière analogue chaque deuxième liaison filaire 22B est également appelée liaison filaire secondaire, la deuxième paire de ports de communication Rx2, Tx2 et la ou les deuxièmes liaisons filaires 22B associées étant des éléments redondants respectivement de la première paire de ports de communication Rx1, Tx1 et de la ou des premières liaisons filaires 22A associées, et utilisés à titre secondaire lorsqu'un port de la première paire Rx1, Tx1 et/ou une première liaison filaire 22A utilisés à titre primaire est dysfonctionnel, c'est-à-dire non-opérationnel, par exemple hors service, ou en panne.

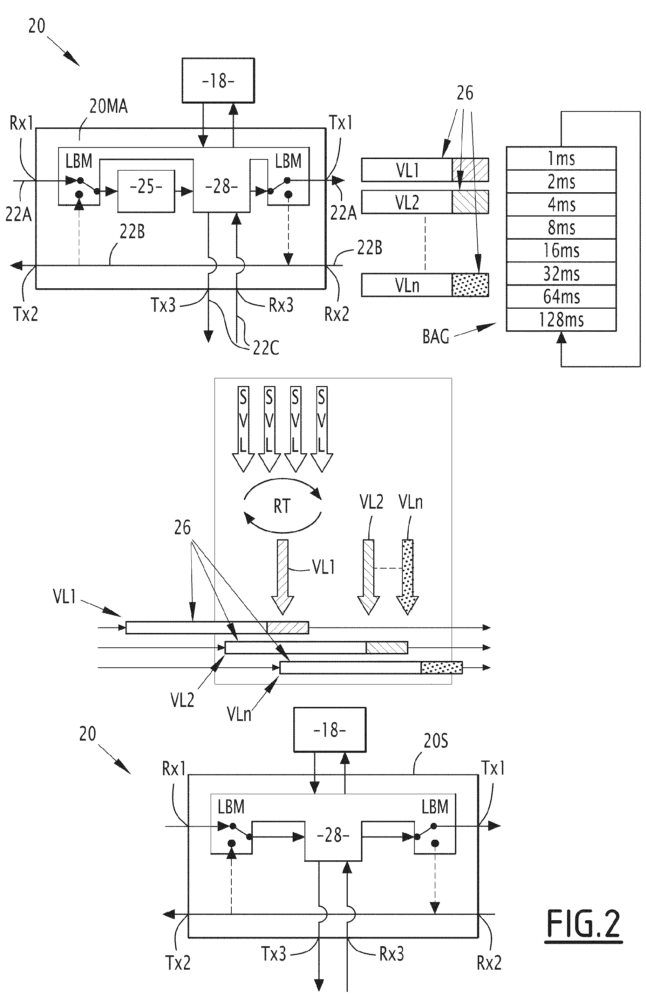

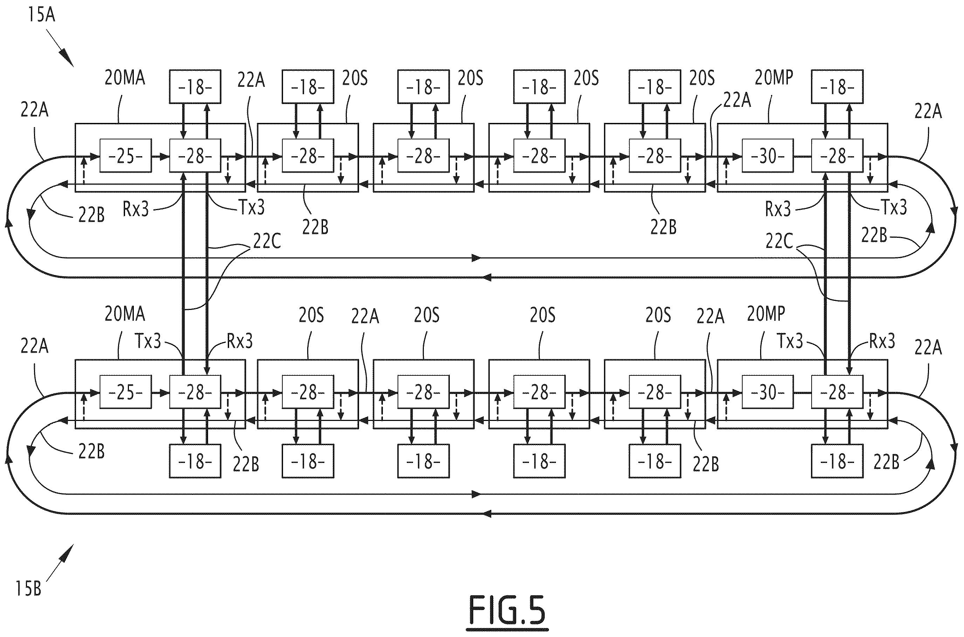

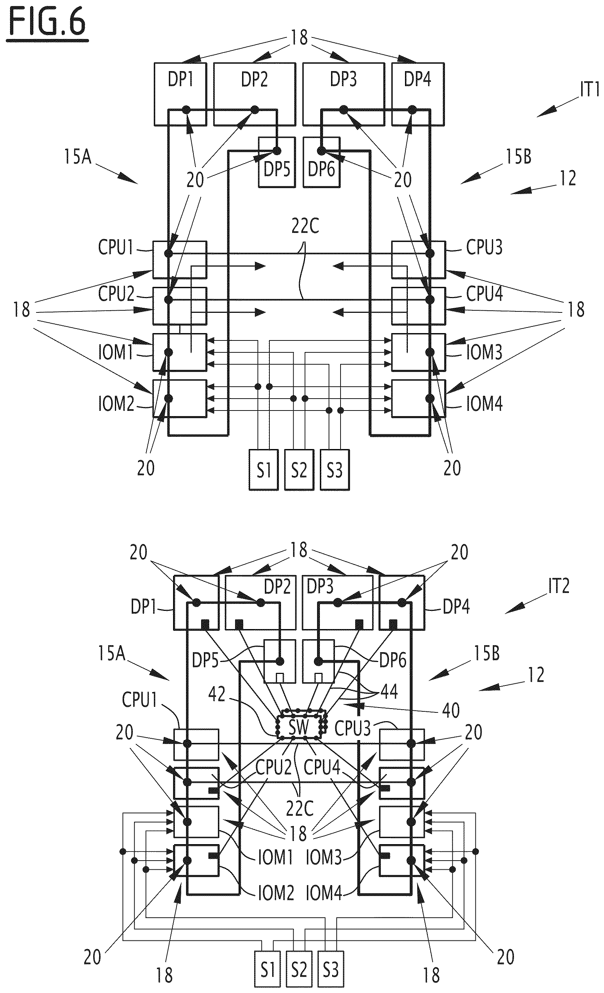

En complément facultatif encore, au moins un nœud de communication 20 comporte une paire additionnelle de ports de communication Rx3, Tx3, visible sur la figure 2, configurée pour être connectée à un autre réseau de communication 15A, 15B, comme représenté dans les exemples des figures 5 et 6, décrites plus en détail par la suite.

Au moins un nœud de communication 20MA comporte un module de séquencement 25 configuré pour générer des trames 26 de transport de données, chaque trame 26 circulant en boucle successivement de nœud 20 en nœud 20. Avantageusement, chaque trame 26 traverse un nœud 20 respectif avec un temps de traversée sensiblement égal à 1 microseconde (µs).

L'au moins un nœud de communication comportant le module de séquencement 25 est typiquement un nœud maitre, noté 20MA ou 20MP, et de préférence un nœud maître actif 20MA, la génération des trames de transport 26 permettant d'effectuer un séquencement de ces trames 26, avec une gestion de l'espacement temporel entre trames 26, ainsi que cela sera décrit ci-après.

Avantageusement, chaque nœud de communication 20 comporte le module de séquencement 25, et le module de séquencement 25 est alors activé de préférence pour un seul des nœuds de communication 20, tel que le nœud maître actif 20MA.

Chaque nœud de communication 20 comporte un module de traitement 28 configuré pour, via les trames 26 générées, recevoir des données à destination dudit équipement avionique 18 de la part d'un autre équipement avionique 18 et/ou pour envoyer des données depuis ledit équipement avionique 18 à destination d'au moins un autre équipement avionique 18. Autrement dit, le module de traitement 28 est configuré pour, via les trames 26 qui traversent le nœud 20 correspondant, lire à la volée des données à destination dudit équipement avionique 18 et/ou pour écrire à la volée des données depuis ledit équipement avionique 18 à destination d'au moins un autre équipement avionique 18.

Avantageusement, chaque nœud de communication 20 comporte le module de séquencement 25 et le module de traitement 28, et le module de séquencement 25 est alors activé pour un seul des nœuds de communication 20, tel que le nœud maître actif 20MA.

Au moins un nœud de communication 20MP comporte un module de surveillance 30 configuré pour comparer une période inter-trame à une plage prédéfinie de valeurs, une anomalie de trame étant détectée si la période inter-trame n'appartient pas à ladite plage. La période inter-trame est la différence entre deux instants temporels de réception de trames 26 successives par le nœud 20MP comportant le module de surveillance 30. Autrement dit, le module de surveillance 30 est configuré pour vérifier la bonne périodicité des trames 26.

L'au moins un nœud de communication comportant le module de surveillance 30 est typiquement un nœud maitre, noté 20MA ou 20MP, et de préférence un nœud maître passif 20MP, la surveillance étant effectuée de manière passive, sans interaction sur la séquence de trames 26.

Avantageusement, chaque nœud de communication 20 comporte le module de surveillance 30 et le module de traitement 28. Le module de surveillance 30 est alors préférentiellement activé pour tous les nœuds de communication 20.

Avantageusement encore, chaque nœud de communication 20 comporte le module de séquencement 25, le module de surveillance 30 et le module de traitement 28, le module de séquencement 25 est activé pour un seul 20MA des nœuds de communication 20, tel que le nœud maître actif 20MA. Le module de surveillance 30 est alors préférentiellement activé pour tous les nœuds de communication 20.

Selon cet aspect avantageux, non représenté, tous les nœuds de communication 20 sont préférentiellement matériellement identiques, chaque nœud 20 étant également appelé nœud de connexion, en permettant de connecter un équipement avionique 18 au réseau. L'homme du métier observera alors que, bien que matériellement identiques, ces nœuds 20 n'ont pas tous le même rôle lors du fonctionnement du réseau avionique de communication 15, et en particulier que le module de séquencement 25 est activé pour un seul nœud 20 parmi tous les nœuds 20 du réseau 15, ce nœud étant appelé typiquement nœud maître, les autres nœuds étant appelés nœuds esclaves.

Cet aspect avantageux permet de réduire encore davantage la masse du réseau de communication 15 puisqu'il n'est alors pas nécessaire d'avoir un ou plusieurs nœuds maîtres dédiés. Cet aspect avantageux permet également d'améliorer la fiabilité du réseau de communication 15, en offrant en particulier davantage de redondance pour le nœud maître, puisqu'en cas de défaillance du nœud remplissant le rôle de nœud maître, n'importe quel autre nœud peut prendre le relais et jouer à son tour le rôle de nœud maître. Typiquement, en cas de défaillance du nœud 20 jouant le rôle de nœud maître, ce nœud 20 sera isolé du réseau de communication 15, et un autre nœud 20, tel que le nœud suivant le nœud défaillant, sera alors configuré pour remplir nouvellement le rôle de nœud maître, en activant alors le module de séquencement 25 pour ledit nœud 20 formant nouvellement le nœud maître.

En variante de cet aspect avantageux, parmi les nœuds de communication 20, deux nœuds de communication 20, dits nœuds maitre 20MA, 20MP, comportent chacun le module de séquencement 25 et le module de surveillance 30, ainsi que le module de traitement 28. Selon cette variante, le module de séquencement 25 est alors activé pour un nœud maitre, dit nœud maitre actif 20MA, et le module de surveillance 30 est activé pour l'autre nœud maitre, dit nœud maitre passif 20MP.

Selon cette variante, les nœuds 20 autres que les nœuds maitre 20MA, 20MP, ces autres nœuds étant également appelés nœuds esclave 20S, comportent préférentiellement seulement le module de traitement 28 parmi les modules de séquencement 25, de surveillance 30 et de traitement 28.

Chaque nœud 20 comprend typiquement une unité de traitement d'informations formée par exemple d'une mémoire et d'un processeur associé à la mémoire, non représentés.

Selon cet exemple, le module de séquencement 25, le module de traitement 28 et le module de surveillance 30 sont réalisés, lorsque présents dans ledit nœud 20 correspondant, chacun sous forme d'un logiciel, ou d'une brique logicielle, exécutables par le processeur. La mémoire du nœud 20 est alors apte à stocker un logiciel de séquencement, un logiciel de traitement et un logiciel de surveillance le cas échéant. Le processeur est alors apte à exécuter chacun des logiciels parmi le logiciel de séquencement, le logiciel de traitement et le logiciel de surveillance.

En variante non représentée, le module de séquencement 25, le module de traitement 28 et le module de surveillance 30 sont réalisés, lorsque présents dans ledit nœud 20 correspondant, chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le nœud de communication 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module de séquencement 25 est par exemple configuré pour générer les trames 26 de transport de données en forme de liens virtuels VL1, VL2, ..., VLn selon la norme ARINC 664 Partie 7, comme représenté sur la figure 2.

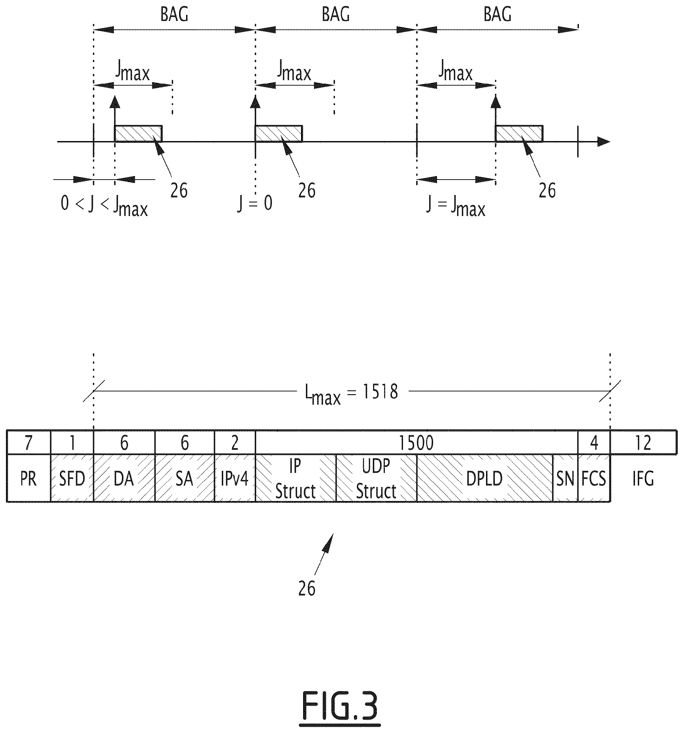

Selon ce complément facultatif, le module de séquencement 25 est alors configuré pour associer un espace inter-trame BAG respectif à chaque lien virtuel VL1, VL2, ..., VLn. L'espace inter-trame BAG est une durée minimale entre des instants temporels de début de deux trames 26 successives du lien virtuel VL1, VL2, ..., VLn correspondant, comme représenté sur la figure 3. Dans l'exemple de la figure 3, une gigue (de l'anglais *jitter*) J est représentée pour chaque trame 26, la valeur de la gigue J variant étant comprise entre une valeur nulle et une valeur maximale notée Jmax.

Dans l'exemple de la figure 2, l'espace inter-trame BAG pour chaque lien virtuel VL1, VL2, ..., VLn est choisi parmi un ensemble prédéfini de valeurs, tels que l'ensemble comportant par exemple les valeurs 250 µs (pour microseconde), 500µs, 1 ms (pour milliseconde), 2 ms, 4 ms, 8 ms, 16 ms, 32 ms, 64 ms et 128 ms. Bien entendu, d'autres valeurs d'espace inter-trame BAG sont possibles, notamment inférieures ou supérieures aux valeurs précitées.

La structure de chaque trame 26 est par exemple conforme à la norme ARINC 664 Partie 7, et comporte alors successivement les champs suivants, dont la description et l'usage sont décrits dans la norme ARINC 664 partie 7, représentés à la figure 3 qui correspond à un extrait de la norme ARINC 664 Partie 7, les nombres indiqués au-dessus des codes des champs correspondent à la taille respective en octet(s) (de l'anglais *byte(s)*) de chaque champ :
- champ PR, correspondant à un préambule (de l'anglais *Preamble*),
- champ SFD (de l'anglais *Start Frame Delimiter*), formant un indicateur de début de trame,
- champ DA (de l'anglais *Destination Address*), contenant une adresse de destination, c'est-à-dire un identifiant du ou de chaque équipement avionique 18 auquel les données incluses dans ladite trame 26 sont destinées,
- champ SA (de l'anglais *Source Address*), contenant une adresse de source, c'est-à-dire un identifiant de l'équipement avionique 18 ayant émis les données incluses dans ladite trame 26,
- champ IPv4 pour préciser le type du protocole IP,
- champ IP Struct (de l'anglais *IP Structure*),
- champ UDP Struct (de l'anglais *UDP Structure*),
- champ DPLD (de l'anglais *Data Payload*), contenant la partie utile de la trame 26 correspondant, c'est-à-dire les données utiles à destination du ou des équipements avioniques 18 identifiés dans le champ DA,
- champ SN (de l'anglais *Serial Number*),
- champ FCS (de l'anglais *Frame Check Seq*), et
- champ IFG (de l'anglais *Inter Frame Gap*), correspondant au dernier champ de la trame 26, et étant un champ laissé vide, pour former une séparation avec la trame 26 suivante circulant sur le réseau de communication 15.

La longueur du champ DPLD formant la partie utile de la trame 26 est typiquement variable. Chaque trame 26 présente alors une longueur variable, tout en ayant une longueur maximale Lₘₐₓ correspondant à l'ensemble des champs DA à FCS, i.e. à tous les champs précités sauf les champs PR, SFD et IFG. La longueur maximale Lₘₐₓ est par exemple égale à 1518 octets, et la trame 26 présente alors une longueur d'au plus 1526 octets en tenant compte des champs PR et SFD, et d'au plus 1538 octets avec en outre le champ IFG.

L'homme du métier observera en outre que dans cet exemple de structure de la figure 3, les champs SFD, DA, SA et IPv4, ainsi que FCS, sont gérés par le module de séquencement 25 lors de la génération de chaque trame 26 respective. Les champs IP Struct, UDP Struct et DPLD sont gérés par le nœud 20 ayant le droit d'émission, c'est-à-dire le droit en écriture, sur la trame 26 correspondante, et en particulier par le module de traitement 28 dudit nœud 20 ayant le droit d'émission.

En complément facultatif, le module de séquencement 25 est configuré pour mesurer un délai de bouclage de chaque trame 26 respective et comparer le délai de bouclage à une plage prédéfinie de valeurs, une anomalie de trame étant détectée si le délai de bouclage n'appartient pas à ladite plage, le délai de bouclage étant la différence entre deux instants temporels successifs de réception de ladite trame 26 par le nœud comportant le module de séquencement 25. En effet, le module de séquencement 25 reçoit quasi simultanément la trame qu'il émet, et peut donc détecter un délai anormal de circulation dans la boucle formée par les nœuds 20.

Le module de traitement 28 de chaque nœud 20 est configuré pour recevoir des données à destination de l'équipement avionique 18 associé audit nœud 20 via la ou les trames 26 correspondantes configurées en lecture et/ou pour transmettre des données à destination d'un autre équipement 18 via la ou les trames 26 correspondantes configurées en écriture.

Entre deux nœuds 20 successifs de l'anneau, les première 22A et deuxième 22B liaisons filaires sont agencées en parallèle l'une de l'autre ; et les modules de traitement 28 desdits nœuds 20 sont configurés pour faire circuler les données suivant un premier sens sur la première liaison 22A, et respectivement suivant un deuxième sens, opposé au premier sens, sur la deuxième liaison 22B.

À titre d'exemple, le module de traitement 28 est configuré pour, si les deux ports Rx1, Tx1 de la première paire sont fonctionnels, i.e. opérationnels, acquérir une trame 26 reçue sur le port récepteur Rx1 de la première paire, pour traiter ladite trame 26, puis pour envoyer la trame 26 traitée via le port émetteur Tx1 de la première paire. Dans ce cas, c'est-à-dire si les deux ports Rx1, Tx1 de la première paire sont fonctionnels, le module de traitement 28 est configuré pour transférer sans traitement, au port émetteur Tx2 de la deuxième paire, chaque trame 26 reçue sur le port récepteur Rx2 de la deuxième paire.

Selon cet exemple, le temps de traversée du nœud 20 correspondant pour l'anneau primaire correspondant aux liaisons primaires 22A, c'est-à-dire le temps mis par une trame 26 respective entre sa réception sur le port récepteur Rx1 et son émission via le port émetteur Tx1 est typiquement de l'ordre de 1 µs (microseconde). Le temps de traversée du nœud 20 correspondant pour l'anneau secondaire correspondant aux liaisons secondaires 22B, c'est-à-dire le temps mis par une trame 26 respective pour être transférée sans traitement du port récepteur Rx2 ou port émetteur Tx2 est typiquement bien inférieur à 1 µs, par exemple de l'ordre de 0,1 µs.

En complément facultatif, le module de traitement 28 est configuré pour, si le port récepteur Rx1 de la première paire est dysfonctionnel, i.e. non-opérationnel, acquérir une trame 26 reçue sur le port récepteur Rx2 de la deuxième paire, pour traiter ladite trame 26, puis pour envoyer la trame 26 traitée via le port émetteur Tx1 de la première paire.

En complément facultatif encore, le module de traitement 28 est configuré pour, si le port émetteur Tx1 de la première paire est dysfonctionnel, i.e. non-opérationnel, acquérir une trame 26 reçue sur le port récepteur Rx1 de la première paire, pour traiter ladite trame 26, puis pour envoyer la trame 26 traitée via le port émetteur Tx2 de la deuxième paire.

L'homme du métier comprendra que par traiter la trame 26, on entend lire des données dans la trame 26 et/ou écrire des données dans la trame 26.

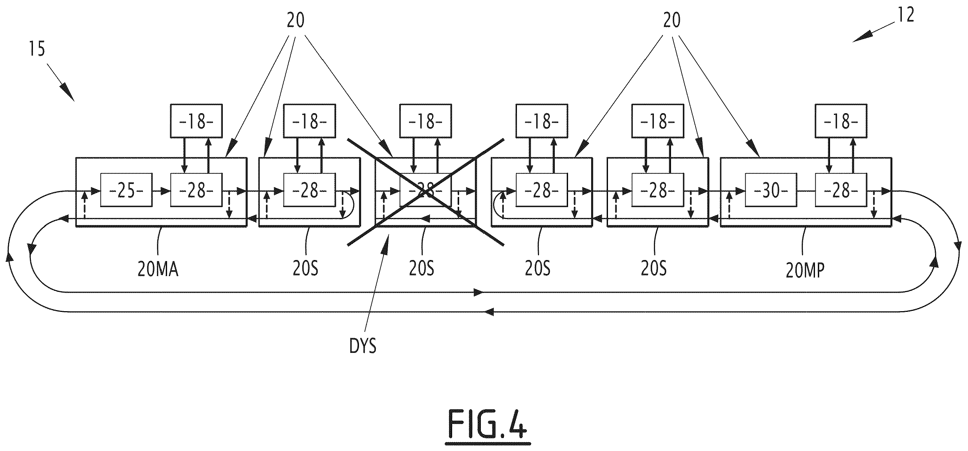

Ce mécanisme mis en œuvre par le module de traitement 28 est également appelé mécanisme de bouclage, noté LBM (de l'anglais *Loop Back Mechanism*) à la figure 2, et permet alors de conserver une boucle de liaison entre nœuds 20 opérationnels pour former le réseau de communication en anneau 15 avec les nœuds 20 demeurant opérationnels, même en cas de dysfonctionnement d'un nœud 20 défaillant. Ceci est représenté à la figure 4, où le nœud 20 défaillant est barré par une croix, et les autres nœuds 20 demeurant opérationnels sont alors reliés entre eux via la boucle correspondant aux flèches en gras.

Dans l'exemple de la figure 4, lorsqu'un nœud 20 est totalement en panne, la boucle est maintenue entre les nœuds 20 demeurant opérationnels en mettant en œuvre ce mécanisme de bouclage pour les deux nœuds 20 situés de part et d'autre du nœud 20 défaillant. Plus précisément, le nœud 20 situé en amont du nœud 20 défaillant suivant le sens de circulation des trames 26 sur les liaisons primaires 22A ne pouvant envoyer les trames au nœud 20 défaillant via le port émetteur Tx1 de sa première paire va alors envoyer ces trames 26 via le port émetteur Tx2 de la deuxième paire, c'est-à-dire sur la liaison secondaire 22B connecté à ce port émetteur Tx2, et alors en sens inverse par rapport au sens de circulation des trames 26 sur les liaisons primaires 22A. Pour le nœud 20 situé en aval du nœud 20 défaillant suivant le sens de circulation des trames 26 sur les liaisons primaires 22A, les trames 26 vont alors circuler sur les liaisons secondaires 22B, de par le mécanisme de bouclage mis en œuvre sur le nœud amont, comme décrit ci-dessus, et ce nœud aval ne pouvant alors envoyer les trames 26 au nœud 20 défaillant via le port émetteur Tx2 de sa deuxième paire va alors les envoyer via le port émetteur Tx1 de sa première paire, c'est-à-dire sur la liaison primaire 22A connecté à ce port émetteur Tx1, et alors dans le sens de circulation des trames 26 sur les liaisons primaires 22A, également appelé sent direct, et donc à nouveau en direction du nœud amont.

Avec ce mécanisme de bouclage LBM, le réseau de communication en anneau 15 selon l'invention reste alors opérationnel même en cas de panne de l'un de ses nœuds de communication 20.

L'homme du métier observera que les flèches en trait pointillé à l'intérieur des nœuds 20 sur les figures 1, 2, 4 et 5 représentent les dérivations de liaison possibles résultant de ce mécanisme de bouclage LBM.

Selon un autre complément facultatif, pour chaque trame 26 de transport de données, le module de traitement 28 d'un seul nœud 20 respectif est autorisé à écrire des données dans ladite trame 26 pour envoi de données à un ou plusieurs des autres équipements 18, et les modules de traitement 28 de tous les autres nœuds 20 sont autorisés seulement à lire des données de ladite trame 26. Autrement dit, selon ce complément facultatif, un seul nœud 20 respectif dispose de droits en écriture dans ladite trame 26.

En complément facultatif encore, les données à émettre par un équipement avionique 18 respectif sont positionnées par le module de traitement 28 correspondant dans un sous-lien virtuel SVL (de l'anglais *Sub-Virtual Link*)*,* visible à la figure 2, potentiellement plusieurs trames 26 à la fois. Les trames 26 positionnées dans les sous-liens virtuels SVL sont ensuite positionnées par le module de traitement 28 correspondant dans le lien virtuel VL associé, en prenant une par une les trames dans les sous-liens virtuels SVL. Ce mécanisme appelé aller-retour (de l'anglais round trip), illustré par les flèches RT à la figure 2, permet de ne pas retarder l'envoi d'une petite trame par un train important de trames 26.

En complément, le module de traitement 28 est configuré pour mettre en œuvre un mécanisme de ramassage de trames 26 contenues dans les liens virtuels VL1, VL2, ..., VLn lorsque la ou les trames 26 ayant l'en-tête d'un lien virtuel VL1, VL2, ..., VLn correspondant traversent le nœud 20 comportant ledit module de traitement 28.

L'homme du métier observera plus généralement que chaque module de traitement 28 est configuré pour effectuer un traitement à la volée des trames 26 transitant par le nœud 20 correspondant audit module de traitement 28.

Lorsqu'au moins un nœud de communication 20 comporte la paire additionnelle de ports de communication Rx3, Tx3, et de préférence lorsque deux nœuds de communication 20, tels que les deux nœuds maitres 20MA, 20MP, comportent chacun la paire additionnelle de ports de communication Rx3, Tx3, le réseau avionique de communication en anneau 15 selon l'invention est alors apte à être interconnecté avec un autre réseau de communication, et par exemple avec un autre réseau de communication en anneau 15 selon l'invention, comme représenté à la figure 5.

Dans l'exemple de la figure 5, un premier réseau de communication en anneau 15A est interconnecté avec un deuxième réseau de communication en anneau 15B. Dans cet exemple, chaque réseau 15A, 15B comporte à la fois un nœud maître actif 20A et un nœud maître passif 20B, chacun ayant la paire additionnelle de ports de communication Rx3, Tx3. L'interconnexion entre les premier et deuxième réseaux 15A, 15B est alors effectuée en connectant à chaque fois le nœud maître actif 20MA d'un réseau 15A, 15B au nœud maître passif 20MP de l'autre réseau 15B, 15A, via leurs paires additionnelles de ports de communication Rx3, Tx3 et des troisièmes liaisons filaires 22C connectant à chaque fois un port émetteur Tx3 à un port récepteur Rx3. Les flux de données d'interconnexion sont déclarés dans les deux modules de séquencement 25 des deux réseaux 15A, 15B, de manière à ce que les flux de données entrants dans un réseau 15A, 15B par un port émetteur Tx3 soient insérés par copie au moment où circule sur ledit réseau 15A, 15B la trame 26 ayant le même identifiant.

En termes de disponibilité et de tolérance aux pannes, deux réseaux de communication en anneau 15A, 15B selon l'invention connectés entre eux sont équivalents à une topologie en étoile commutée à quatre commutateurs, conforme à la norme ARINC 664 Partie 7.

Cette architecture avec deux réseaux de communication en anneau 15A, 15B selon l'invention connectés entre eux est illustrée dans deux exemples de mise en œuvre sur la figure 6.

Selon un premier exemple, une première installation IT1 comprend alors six écrans d'affichage DP1, DP2, DP3, DP4, DP5, DP6, quatre cartes électroniques de calcul CPU1, CPU2, CPU3, CPU4 et quatre cartes électroniques d'entrée-sortie IOM1, IOM2, IOM3, IOM4, chacun de ces écrans, cartes électroniques de calcul ou encore cartes électroniques d'entrée-sortie formant un équipement avionique 18, et étant alors associée à un nœud de communication 20 respectif. Dans cet exemple, le nœud de communication 20 est d'ailleurs intégré à l'équipement avionique 18 respectif auquel il est associé. La première installation IT1 comporte également trois capteurs S1, S2, S3, reliés aux cartes électroniques d'entrée-sortie IOM1, IOM2, IOM3, IOM4.

Dans le premier exemple de la figure 6, trois écrans d'affichage DP1, DP2, DP5, deux cartes électroniques de calcul CPU1, CPU2 et deux cartes électroniques d'entrée-sortie IOM1, IOM2 sont alors interconnectés entre eux via le premier réseau de communication en anneau 15A ; et respectivement les trois autres écrans d'affichage DP3, DP4, DP6, les deux autres cartes électroniques de calcul CPU3, CPU4 et les deux autres cartes électroniques d'entrée-sortie IOM3, IOM4 sont alors interconnectés entre eux via le deuxième réseau de communication en anneau 15B. L'interconnexion entre les premier et deuxième réseaux de communication 15A, 15B est alors par exemple effectuée via les nœuds de communication 20 intégrés aux quatre cartes électroniques de calcul CPU1, CPU2, CPU3, CPU4, ces nœuds 20 formant les deux nœuds maîtres, actif 20MA et passif 20MP respectivement.

Selon un deuxième exemple de mise en œuvre à la figure 6, une deuxième installation IT2 comprend les mêmes équipements avioniques 18 que la première installation IT1 et les premier et deuxième réseaux de communication 15A, 15B interconnectés entre eux comme pour la première installation IT1.

Selon ce deuxième exemple, la deuxième installation IT2 comprend en outre un réseau additionnel de communication 40 en étoile avec des commutateurs 42 et des liaisons filaires 44 associées permettant d'interconnecter lesdits équipements avioniques 18, c'est-à-dire les six écrans d'affichage DP1, DP2, DP3, DP4, DP5, DP6, quatre cartes électroniques de calcul CPU1, CPU2, CPU3, CPU4 et quatre cartes électroniques d'entrée-sortie IOM1, IOM2, IOM3, IOM4, en outre selon une topologie en étoile.

Cette architecture hybride selon le deuxième exemple avec, d'une part, les premier et deuxième réseaux de communication 15A, 15B selon l'invention, et d'autre part, le réseau additionnel de communication 40 en étoile avec commutateurs 42 selon l'état de la technique permet alors d'atteindre un haut niveau de dissimilarité d'architecture pour offrir une disponibilité et une tolérance aux pannes encore meilleures.

Ainsi, le réseau avionique de communication en anneau 15 selon l'invention forme un réseau sans commutateur avec une topologie en boucle ayant une disponibilité équivalente à un réseau de l'état de la technique conforme à la norme ARINC 664 Partie 7, tout en apportant les améliorations suivantes par rapport à ce réseau de l'état de la technique :
- une intégrité supérieure au réseau de l'état de la technique, de par la surveillance effectuée par le module de surveillance 30, avec notamment la détection du cas de panne correspondant à un délai anormal de transmission d'une trame 26 ;
- une performance meilleure en terme de jigue, notamment de par l'absence de commutateur, permettant d'élargir le domaine d'usage du réseau de communication 15 selon l'invention, en permettant des flux de données avec une gigue très faible de l'ordre de la microseconde ;
- un déterminisme par nature permettant de simplifier considérablement la qualification du réseau de communication 15 selon l'invention, et rendant possible une qualification incrémentale dudit réseau 15 ;
- la possibilité de synchroniser temporellement les équipements avionique 18 interconnectés via ledit réseau de communication 15 selon l'invention, avec une synchronisation de l'ordre de la microseconde.

En outre, les taille, masse et consommation, ou SWaP, du réseau avionique de communication 15 selon l'invention, ainsi que son coût, sont améliorés significativement par rapport au réseau de l'état de la technique, avec la suppression des commutateurs et la réduction du câblage.

La performance du réseau de communication 15 selon l'invention est également améliorée grâce à une programmation déterministe des flux de communication permettant de maîtriser celle-ci et d'atteindre pour les flux de données qui le nécessite une gigue de l'ordre de la microseconde.

Le déterminisme et la qualification incrémentale du réseau de communication 15 selon l'invention sont obtenus grâce à la programmation déterministe des flux de communication, de par la génération des trames de transport de données 26 à intervalles temporels réguliers, par exemple sous forme de liens virtuels, servant de vecteurs, ou « véhicules », pour le transport de ces données.

En outre, à la différence de certains réseaux de communication de l'état de la technique mettant en œuvre un protocole d'arbitrage, le réseau avionique de communication 15 selon l'invention ne nécessite pas de protocole d'arbitrage puisqu'un seul des nœuds de communication est autorisé à générer des trames de transport à un instant temporel donné et qu'il n'y alors pas de risque de collision entre trames.

On conçoit ainsi que le réseau avionique de communication 15 selon l'invention est amélioré par rapport au réseau de l'état de la technique.

## Revendications

1. Réseau avionique de communication en anneau (15), destiné à être embarqué à bord d'un aéronef civil (10) et comprenant au moins trois nœuds de communication (20) reliés entre eux en forme d'un anneau,
chaque nœud de communication (20, 20MA, 20MP, 20S) comportant au moins une paire de ports de communication (Rx1, Tx1 ; Rx2, Tx2) et étant connecté directement entre un nœud (20) précédent et un nœud (20) suivant respectifs via deux ports distincts (Rx1, Tx1 ; Rx2, Tx2) respectifs, les ports de communication (Rx1, Tx1 ; Rx2, Tx2) de deux nœuds (20) successifs de l'anneau étant connectés entre eux via une liaison filaire de données (22),
au moins un nœud de communication (20MA) comportant un module de séquencement (25) configuré pour générer des trames (26) de transport de données, chaque trame (26) circulant en boucle successivement de nœud (20) en nœud (20),
chaque nœud de communication (20, 20MA, 20MP, 20S) étant destiné à être relié à un équipement avionique (18) respectif et comportant un module de traitement (28) configuré pour, via les trames (26) générées, recevoir des données à destination dudit équipement avionique (18) de la part d'un autre équipement avionique (18) et/ou pour envoyer des données depuis ledit équipement avionique (18) à destination d'au moins un autre équipement avionique (18),
à un instant temporel donné, un seul des nœuds de communication (20) étant configuré pour générer les trames (26) de transport de données, le module de séquencement (25) étant activé pour un seul des nœuds de communication (20) à la fois.

2. Réseau (15) selon la revendication 1, dans lequel chaque nœud de communication (20) comporte le module de séquencement (25) et le module de traitement (28).

3. Réseau (15) selon la revendication 1 ou 2, dans lequel au moins un nœud de communication (20MP) comporte un module de surveillance (30) configuré pour comparer une période inter-trame à une plage prédéfinie de valeurs, une anomalie de trame étant détectée si la période inter-trame n'appartient pas à ladite plage, la période inter-trame étant la différence entre deux instants temporels de réception de trames (26) successives par le nœud comportant le module de surveillance (30) ;
chaque nœud de communication (20) comportant de préférence le module de surveillance (30) et le module de traitement (28) ;
le module de surveillance (30) étant de préférence encore activé pour tous les nœuds de communication (20).

4. Réseau (15) selon les revendications 2 et 3, dans lequel chaque nœud de communication (20) comporte le module de séquencement (25), le module de surveillance (30) et le module de traitement (28) ;
le module de surveillance (30) étant de préférence activé pour tous les nœuds de communication (20).

5. Réseau (15) selon l'une quelconque des revendications 1 à 3, dans lequel parmi les nœuds de communication (20), deux nœuds de communication (20), dits nœuds maitre (20MA, 20MP), comportent chacun le module de séquencement (25) et le module de surveillance (30), le module de séquencement (25) étant alors activé pour un nœud maitre, dit nœud maitre actif (20MA), et le module de surveillance (30) étant activé pour l'autre nœud maitre, dit nœud maitre passif (20MP) ;
les nœuds de communication, dits nœuds esclave (20S), autres que les nœuds maitre (20MA, 20MP) comportant de préférence seulement le module de traitement (28) parmi les modules de séquencement (25), de surveillance (30) et de traitement (28).

6. Réseau (15) selon l'une quelconque des revendications précédentes, dans lequel chaque nœud de communication (20, 20MA, 20MP, 20S) comporte une première paire de ports de communication (Rx1, Tx1) et une deuxième paire de ports de communication (Rx2, Tx2), redondante de la première paire (Rx1, Tx1) ; les ports de communication (Rx1, Tx1) des premières paires étant successivement connectés entre eux via des premières liaisons filaires de données (22A), et les ports de communication des deuxièmes paires (Rx2, Tx2) étant successivement connectés entre eux via des deuxièmes liaisons filaires de données (22B), redondantes des premières liaisons (22A).

7. Réseau (15) selon la revendication 6, dans lequel entre deux nœuds (20) successifs de l'anneau, les première (22A) et deuxième (22B) liaisons filaires sont agencées en parallèle l'une de l'autre ; et les modules de traitement (28) desdits nœuds (20) sont configurés pour faire circuler les données suivant un premier sens sur la première liaison (22A), et respectivement suivant un deuxième sens, opposé au premier sens, sur la deuxième liaison (22B).

8. Réseau (15) selon la revendication 6 ou 7, dans lequel chaque paire de ports (Rx1, Tx1 ; Rx2, Tx2) comporte un port récepteur (Rx1, Rx2) et un port émetteur (Tx1, Tx2) ; et
- si les deux ports (Rx1, Tx1) de la première paire sont fonctionnels, le module de traitement (28) est configuré pour acquérir une trame (26) reçue sur le port récepteur (Rx1) de la première paire, pour traiter ladite trame (26), puis pour envoyer la trame (26) traitée via le port émetteur (Tx1) de la première paire ; et le module de traitement (28) est configuré pour transférer sans traitement, au port émetteur (Tx2) de la deuxième paire, chaque trame (26) reçue sur le port récepteur (Rx2) de la deuxième paire ;
- si le port récepteur (Rx1) de la première paire est dysfonctionnel, le module de traitement (28) est configuré pour acquérir une trame (26) reçue sur le port récepteur (Rx2) de la deuxième paire, pour traiter ladite trame (26), puis pour envoyer la trame (26) traitée via le port émetteur (Tx1) de la première paire ; et
- si le port émetteur (Tx1) de la première paire est dysfonctionnel, le module de traitement (28) est configuré pour acquérir une trame (26) reçue sur le port récepteur (Rx1) de la première paire, pour traiter ladite trame (26), puis pour envoyer la trame (26) traitée via le port émetteur (Tx2) de la deuxième paire.

9. Réseau (15) selon l'une quelconque des revendications précédentes, dans lequel au moins un nœud de communication (20) comporte une paire additionnelle de ports de communication (Rx3, Tx3) configurée pour être connectée à un autre réseau de communication (15A ; 15B).

10. Réseau (15) selon l'une quelconque des revendications précédentes, dans lequel le module de séquencement (25) est configuré pour générer les trames (26) de transport de données en forme de liens virtuels (VL1, VL2, ..., VLn) selon la norme ARINC 664 Partie 7, et pour associer un espace inter-trame (BAG) respectif à chaque lien virtuel (VL1, VL2, ..., VLn), l'espace inter-trame (BAG) étant une durée minimale entre des instants temporels de début de deux trames (26) successives du lien virtuel (VL1, VL2, ..., VLn) correspondant.

11. Réseau (15) selon l'une quelconque des revendications précédentes, dans lequel pour chaque trame (26) de transport de données, le module de traitement (28) d'un seul nœud (20) respectif est autorisé à écrire des données dans ladite trame (26) pour envoi de données à un ou plusieurs des autres équipements (18), et les modules de traitement (28) de tous les autres nœuds (20) sont autorisés seulement à lire des données de ladite trame (26).

12. Aéronef civil (10) comprenant un réseau avionique de communication en anneau (15) selon l'une quelconque des revendications précédentes et des équipements avioniques (18) interconnectés via ledit réseau (15).

## Revendications modifiées

### Revendications modifiées conformément à la règle 137(2) CBE.

1. Réseau avionique de communication en anneau (15), destiné à être embarqué à bord d'un aéronef civil (10) et comprenant au moins trois nœuds de communication (20) reliés entre eux en forme d'un anneau,
chaque nœud de communication (20, 20MA, 20MP, 20S) comportant au moins une paire de ports de communication (Rx1, Tx1 ; Rx2, Tx2) et étant connecté directement entre un nœud (20) précédent et un nœud (20) suivant respectifs via deux ports distincts (Rx1, Tx1 ; Rx2, Tx2) respectifs, les ports de communication (Rx1, Tx1 ; Rx2, Tx2) de deux nœuds (20) successifs de l'anneau étant connectés entre eux via une liaison filaire de données (22),
chaque nœud de communication (20, 20MA) comportant un module de séquencement (25) configuré pour générer des trames (26) de transport de données, chaque trame (26) circulant en boucle successivement de nœud (20) en nœud (20),
chaque nœud de communication (20, 20MA, 20MP, 20S) étant destiné à être relié à un équipement avionique (18) respectif et comportant un module de traitement (28) configuré pour, via les trames (26) générées, recevoir des données à destination dudit équipement avionique (18) de la part d'un autre équipement avionique (18) et/ou pour envoyer des données depuis ledit équipement avionique (18) à destination d'au moins un autre équipement avionique (18),
à un instant temporel donné, un seul des nœuds de communication (20) étant configuré pour générer les trames (26) de transport de données, le module de séquencement (25) étant activé pour un seul des nœuds de communication (20) à la fois,
chaque nœud de communication (20, 20MP) comportant en outre un module de surveillance (30) configuré pour comparer une période inter-trame à une plage prédéfinie de valeurs, une anomalie de trame étant détectée si la période inter-trame n'appartient pas à ladite plage, la période inter-trame étant la différence entre deux instants temporels de réception de trames (26) successives par le nœud comportant le module de surveillance (30).

2. Réseau (15) selon la revendication 1, dans lequel le module de surveillance (30) est activé pour tous les nœuds de communication (20).

3. Réseau (15) selon la revendication 1, dans lequel le module de séquencement (25) est activé pour un nœud maitre, dit nœud maitre actif (20MA), et le module de surveillance (30) est activé pour un autre nœud maitre, dit nœud maitre passif (20MP).

4. Réseau (15) selon l'une quelconque des revendications précédentes, dans lequel chaque nœud de communication (20, 20MA, 20MP, 20S) comporte une première paire de ports de communication (Rx1, Tx1) et une deuxième paire de ports de communication (Rx2, Tx2), redondante de la première paire (Rx1, Tx1) ; les ports de communication (Rx1, Tx1) des premières paires étant successivement connectés entre eux via des premières liaisons filaires de données (22A), et les ports de communication des deuxièmes paires (Rx2, Tx2) étant successivement connectés entre eux via des deuxièmes liaisons filaires de données (22B), redondantes des premières liaisons (22A).

5. Réseau (15) selon la revendication 4, dans lequel entre deux nœuds (20) successifs de l'anneau, les première (22A) et deuxième (22B) liaisons filaires sont agencées en parallèle l'une de l'autre ; et les modules de traitement (28) desdits nœuds (20) sont configurés pour faire circuler les données suivant un premier sens sur la première liaison (22A), et respectivement suivant un deuxième sens, opposé au premier sens, sur la deuxième liaison (22B).

6. Réseau (15) selon la revendication 4 ou 5, dans lequel chaque paire de ports (Rx1, Tx1 ; Rx2, Tx2) comporte un port récepteur (Rx1, Rx2) et un port émetteur (Tx1, Tx2) ; et
- si les deux ports (Rx1, Tx1) de la première paire sont fonctionnels, le module de traitement (28) est configuré pour acquérir une trame (26) reçue sur le port récepteur (Rx1) de la première paire, pour traiter ladite trame (26), puis pour envoyer la trame (26) traitée via le port émetteur (Tx1) de la première paire ; et le module de traitement (28) est configuré pour transférer sans traitement, au port émetteur (Tx2) de la deuxième paire, chaque trame (26) reçue sur le port récepteur (Rx2) de la deuxième paire ;
- si le port récepteur (Rx1) de la première paire est dysfonctionnel, le module de traitement (28) est configuré pour acquérir une trame (26) reçue sur le port récepteur (Rx2) de la deuxième paire, pour traiter ladite trame (26), puis pour envoyer la trame (26) traitée via le port émetteur (Tx1) de la première paire ; et
- si le port émetteur (Tx1) de la première paire est dysfonctionnel, le module de traitement (28) est configuré pour acquérir une trame (26) reçue sur le port récepteur (Rx1) de la première paire, pour traiter ladite trame (26), puis pour envoyer la trame (26) traitée via le port émetteur (Tx2) de la deuxième paire.

7. Réseau (15) selon l'une quelconque des revendications précédentes, dans lequel au moins un nœud de communication (20) comporte une paire additionnelle de ports de communication (Rx3, Tx3) configurée pour être connectée à un autre réseau de communication (15A ; 15B).

8. Réseau (15) selon l'une quelconque des revendications précédentes, dans lequel le module de séquencement (25) est configuré pour générer les trames (26) de transport de données en forme de liens virtuels (VL1, VL2, ..., VLn) selon la norme ARINC 664 Partie 7, et pour associer un espace inter-trame (BAG) respectif à chaque lien virtuel (VL1, VL2, ..., VLn), l'espace inter-trame (BAG) étant une durée minimale entre des instants temporels de début de deux trames (26) successives du lien virtuel (VL1, VL2, ..., VLn) correspondant.

9. Réseau (15) selon l'une quelconque des revendications précédentes, dans lequel pour chaque trame (26) de transport de données, le module de traitement (28) d'un seul nœud (20) respectif est autorisé à écrire des données dans ladite trame (26) pour envoi de données à un ou plusieurs des autres équipements (18), et les modules de traitement (28) de tous les autres nœuds (20) sont autorisés seulement à lire des données de ladite trame (26).

10. Aéronef civil (10) comprenant un réseau avionique de communication en anneau (15) selon l'une quelconque des revendications précédentes et des équipements avioniques (18) interconnectés via ledit réseau (15).
